# EUROPEAN PATENT APPLICATION

(11) **EP 2 208 969 A2**
(43) Date of publication of application: **21.07.2010**
(21) Application number: 10150629.3
(22) Date of filing: 13.01.2010
(51) Int. Cl.: G01F 3/00, G01F 15/00, G01F 15/14

(54) **Meter Box Extension**

(30) Priority: 14.01.2009 GB 0900540
(71) Applicant: The UK Meter Exchange Limited, Glasgow G2 5LA (GB)
(72) Inventor: Foy, Alan, Glasgow, G71 8QT (GB)
(74) Representative: Hayden, Nicholas Mark

(57) **Abstract**

The invention comprises a method of adapting a first utility meter box, such as that for a credit type meter, into an extended meter box for the housing therein of a second type meter, such as a pre-payment card meter. The invention also comprises the resultant extended meter box and for the intermediate extension piece. The method comprises removing the base from a second utility meter box of a type largely similar to said first utility meter box, therefore forming an extension piece, inserting the extension piece into the first utility meter box's cavity, therefore providing an extended meter box and sealing the join between said first utility box and said extension piece.

## Description

This invention relates to boxes for utility meters and, in particular, to semi concealed boxes for gas meters sited externally, on occasions where it is necessary or desirable to raise a standard meter within the box, or to allow the box to accept other types of, or other manufacturers', meters, credit or prepaid, and/or other ancillary equipment.

It is known for externally sited utility meters, such as gas meters, to be both protected from the elements and substantially concealed by a utility meter box (known as a semi-concealed meter box). Such boxes include:
- Transco box. Transco is the main gas transporter in the UK.
- Transco "wet box" - having holes in the base of the box
- IGT (Independent Gas Transporters) boxes - individual box sizes specifically used by IGTs, which include GTC (Gas Transportation Company), Connect and ESP (East Surrey Pipelines) amongst others.

In each case, the meter box is specifically designed for a conventional credit gas meters, most of which fit within these boxes. Credit meters which simply record the amount of gas used, to be read by the supplier for billing later.

It is sometimes necessary or desirable at certain premises to replace such a credit gas meter with a pre-payment gas meter, which will only allow gas to be supplied to the premises when in credit (or possibly within a predetermined amount of debit, to act as a "buffer" should credit run out). Usually, these meters accept pre-payment in the form of pre-payment cards, available from retailers, and inserted into a card slot somewhere on the meter). Other types may accept cash, or (now or in the future) payment from bank cards or similar.

However, pre-payment meters tend to be physically larger (in one or more dimensions) than credit meters, and therefore may not fit inside the original credit meter's semi concealed box. Even where they do, it is often the case that the card slot is rendered inaccessible, which is obviously unacceptable. One solution is simply to modify the service so that the semi concealed box is bypassed and replaced by a new stet box. However, this approach is costly, could lead to damage to consumer property (or at least the perception of), and is time consuming. Another option to address this problem is to install an extension piece to the base. However such extension pieces are currently only available on Transco boxes.

It would be desirable, therefore, to have a relatively simple method of adapting other types of semi concealed meter boxes, and in particular those used by IGTs, to accept a pre-payment type of meter.

It is an aim of the present invention to address one or more of the above problems.

In a first aspect of the invention there is provided a method of adapting a first utility meter box, suitable for the housing therein of a first type of utility meter, to an extended meter box suitable for the housing therein of a second type meter, said method comprising:
removing the base from a second utility meter box of a type largely similar to said first utility meter box, therefore forming an extension piece;
inserting said extension piece into the first utility meter box's cavity, therefore providing an extended meter box;
sealing the join between said first utility box and said extension piece.

Said first and second utility meter box may be of a type of box known as a semi concealed meter box. In particular said semi concealed meter boxes may be one of those used by Independent Gas Transporters. Said boxes may be of a type manufactured by "Mitras", "Hepworth" or "Continental Products".

Said first type of meter may comprise a credit type meter and said second type of meter may comprise a pre-payment type meter. Said meters may be natural gas meters.

Said sealing step should provide a largely weather resistant seal. Such a seal may take the form of a fixed gasket and/or a silicone bead around the join.

Said sealing step may include sealing the join between said extension piece and said first utility meter box with a waterproof sealant.

Said method may further comprise attaching a bracket to the inside of said extended meter box, for the holding of said pre-payment meter.

Said extension piece may be pre-prepared at a site remote from said first utility meter box. Said pre-preparation may include pre-installation of said bracket.

Said method may comprise the initial step of removing the lid from said first utility meter box and a final step of re-attaching said lid to said extended meter box. Alternatively, the lid of the second utility box could be used, pre-installed to said extension piece. The former of these alternatives is preferred so as to reduce the amount of material (second lid) which needs to be carried to and from the meter site, as well as allowing a number of extension pieces to be stacked in a space efficient manner for transportation (removal and replacement of the lid being very simple).

While said extended box may be suitable for housing said second type of meter, it may be used to house the original meter, so as to prevent it from water damage by raising it within its box, or to allow the housing of further ancillary equipment.

In a further aspect of the invention there is provided an extended utility meter box obtained by any of the methods according to the first aspect of the invention.

The invention also provides for a method of replacing a first type meter located inside a first utility meter box to a second type meter, the method comprising adapting said first utility meter box according to any of the methods described in accordance with the first aspect of the invention.

Said first type of meter may comprise a credit type meter and said second type of meter may comprise a pre-payment type meter. Said meters may be natural gas meters.

Said method may include replacing the flexible inlet pipe with a longer one and some modification of outlet pipework.

Where said first utility meter box comprises a well for the location therein of a lower portion of said credit meter, said method may further include placing the pre-payment meter on top of said well. Said meter maybe further held in position by said bracket.

Said pre-payment meter should be installed in such a way that pre-payment is able to be effected relatively unimpeded (Obviously "relatively unimpeded" does not include the need to lift the box lid).

In a further aspect of the invention there is provided a method of producing an extension piece from a utility meter box suitable for the housing therein of a first type utility meter, for extending a further such utility meter box so as to adapt it for the housing therein of a second type meter, said method comprising:
removing the base from said utility meter box; and
attaching a bracket to the inside of said extension piece for holding said second type meter.

Said first type of meter may comprise a credit type meter and said second type of meter may comprise a pre-payment type meter. Said meters may be natural gas meters.

Said utility meter box may be of a type of box known as a semi concealed meter box, and specifically may be meter boxes used by independent gas transporters. Said boxes may be of a type manufactured by "Mitras", "Hepworth" or "Continental Products".

Said method may comprise the step of removing the lid from said utility meter box. Alternatively, the lid of the utility box could be retained, pre-installed to said extension piece.

Said extension piece may further comprise modified pipework, either pre-installed thereto, or as part of a kit for later installation, or a mixture of both, for attachment to said second type meter.

In a yet further aspect of the invention there is provided an extension piece obtained by any of the methods according to the immediately preceding aspect of the invention.

### BRIEF DESCRIPTION OF THE DRAWINGS

Embodiments of the invention will now be described, by way of example only, by reference to the accompanying drawings, in which:
Figures 1 a and 1 b show a top and side view of a IGT type semi-concealed meter box;
Figure 2 shows an extension piece in accordance with an embodiment of the invention; and
Figure 3 shows a box as shown in Figures 1 a and 1 b extended in accordance with an embodiment of the invention.

### DETAILED DESCRIPTION OF THE EMBODIMENTS

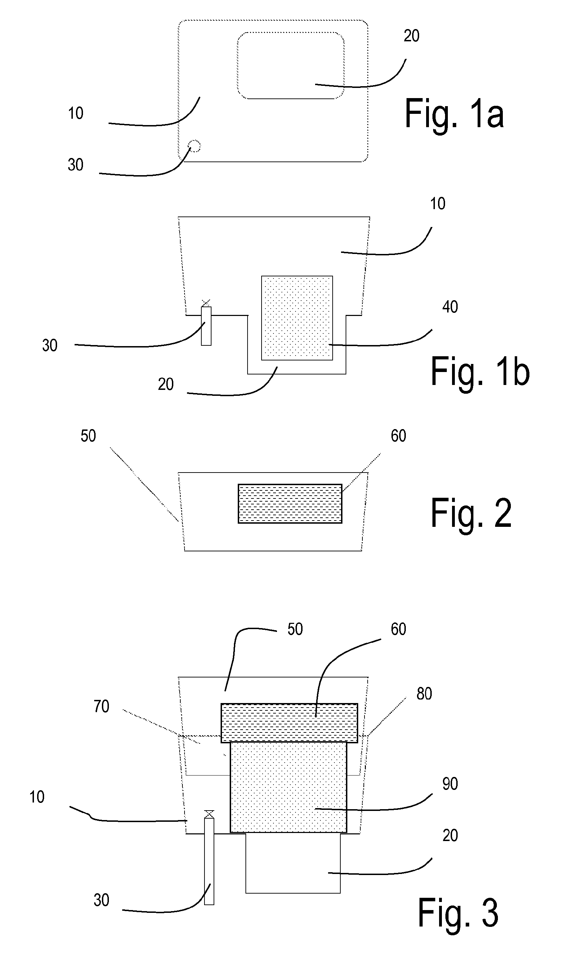

**Figures 1** **a and 1 b show respectively, top down and side views of an IGT type semi-**concealed box 10 designed for the housing of meters, and in particular gas meters which are located externally. There are a number of Independent Gas Transporters in the UK (independent of Transco), many of which use different designs and types of semi-concealed boxes than those used by Transco. A non-exhaustive list providing details of a number of such boxes, to which embodiments of the invention can be applied, is shown in Table 1. It is notable therefore, that in addition to IGT type semi-concealed boxes, the invention is also applicable to the "Transco Wet Box" In fact, strictly speaking the invention is also applicable to the standard "Transco Box". However, a specific extension piece is available for these boxes to address the problem of housing pre-payment meters, thus presently rendering uneconomical the need to use a second box. However, it should therefore be noted that the invention is applicable to the "Transco box".

**Table 1**

| **Name** | **Manufacturer** | **Manufacturer Ref** |
|---|---|---|
| Transco Wet Box | Mitras | G60032 |
| HEPWORTH DRY BOX | Hepworth | Connect Box |
| Continental / GTC box | Continental Products | M-BROWNBOX-KIT |
| Multibox | Mitras | G60034 |
| Unibox | Hepworth | UB1RD (red box) / UB1 BR (brown) |
| MITRAS SEMI-BURIED GAS METER | Mitras | G60039 |
| BOX | | |
| HEPWORTH DRY BOX | Hepworth | SCMB |

Shown in Figures 1 a and 1 b is a well 20 for the location therein of a bottom portion of a conventional credit meter 40. Also shown is the gas inlet means 30. Usually, such a box 10 will have a lid, however such a lid is not shown on the drawings.

This type of box 10 is specifically designed for housing credit type gas meters 40 which sit in the well 20. Should it be required to replace or substitute a credit type gas meter with a pre- payment type meter, it will be required to adapt the box as the pre- payment type meters are larger in size. Also, it is important that the card slot (or payment slot by other means) is accessible by the meter user.

Figure 2 shows an extension piece 50 for adapting an IGT type semi-concealed box 10 for a pre-payment type meter. It essentially comprises an IGT type semi-concealed box 10, as shown in Figure 1, with lid removed, the bottom portion cut off and a bracket 60 attached. The bracket 60 is for holding the pre-payment meter in place. A number of said extension pieces can be prefabricated in advance, such that they can be carried by a gas engineer to be used as and when required (the type of box used to house a particular meter is not recorded by the industry, so can only be ascertained by inspection). Different types of extension pieces may be carried for different designs of (IGT) semi concealed boxes, where necessary.

Said extension piece 50 may also comprise some modified pipework for attachment to said pre-payment type meters. Further pipework adaptation may also be needed, with the required parts being provided as a kit with said extension piece 50.

Figure 3 shows an extended semi-concealed meter box 70 suitable for housing a pre-payment meter 90. The pre-payment meter in the embodiment shown is suspended by the bracket 60, while also sitting on the well 20, as opposed to inside it. The extended box is comprised of the original meter box 10, into the top cavity of which the (pre-prepared) extension piece 50 has been placed. The original meter box and extension piece should have been made from the same type of box. Due to the sloping walls of the meter box, along with fin like structural members (not shown) inside the box and extension piece (due to the extension piece being made from an identical box to the main box, the structural members are in the same places and abut against each other), the extension piece 50 is prevented from falling completely inside main box 10. The gap 80 between the extension piece 50 and main box 10 is permanently sealed by an exterior weatherproof sealant. The extension piece 50 and main box 10 may also be physically joined together by other means.

Usually, once the main box 10 has been extended, its lid is reused as the lid of the extended box 70.

The larger pre-payment meter 90 is now fully enclosed in the extended box 70, while the pre payment (card) slot easily accessible due to the meter 90 being sited on the well 20 as opposed to inside it.

As a consequence of the methods and apparatus described herein, a gas engineer having the task of replacing credit meters with pre-payment meters, can be equipped with pre-prepared extension pieces for IGT type boxes (in addition to extension pieces specifically manufactured for Transco type boxes, which are already in existence) and can therefore quickly and easily adapt the meter's box while changing the meter, with very little difference to the final appearance of the box. All the engineer has to do is remove the lid of the original box 10, remove the original meter 40, insert the extension piece 50, insert the pre-payment meter 90, attach the pre-payment meter 90 to the bracket 60, connect up the pre-payment meter 90 (using modified pipework supplied with and/or attached to the extension piece 50), seal the gap 80 between the extension piece 50 and main box 10, and finally reattach the original lid to the extended box 70.

While the extension methods and apparatus described above are described with reference to allowing the fitting of pre-payment meters, in particular, there are other genuine advantages and reasons for extending a semi-concealed box as described herein. Firstly, the changes to the box will allow other, alternative types of meters to be installed or to allow further ancillary devices etc. to be housed in the box along with the meter. In the latter case, the box may be extended solely for the housing of the ancillary equipment, such as any Automated Meter Reading equipment (AMR), the original meter being otherwise left unchanged. Also, due to the raised location of the meter (and possibly anything else) in the extended box, an extension as disclosed herein may be warranted to simply protect the meter, or and other ancillary devices /equipment etc., from water which may collect in the bottom of the box.

The above examples are for illustration only and modifications and improvements may be incorporated without departing from the spirit and scope of the invention. For example, the types of boxes may vary from those described.

## Claims

1. A method of adapting a first utility meter box, of a type suitable for the housing therein of a first type of utility meter, into an extended meter box for the housing therein of a second type meter, said method comprising:
removing the base from a second utility meter box of a type largely similar to said first utility meter box, therefore forming an extension piece;
inserting said extension piece into the first utility meter box's cavity, therefore providing an extended meter box;
sealing the join between said first utility box and said extension piece.

2. A method as claimed in claim 2 further comprising attaching a bracket to the inside of said extended meter box, for the holding of said second type meter.

3. A method as claimed in claim 2 or 3 wherein said extension piece is pre-prepared at a site remote from said first utility meter box.

4. A method as claimed in any preceding claim wherein said method comprises an initial step of removing the lid from said first utility meter box and a final step of re-attaching said lid to said extended meter box.

5. A method as claimed in any of claims 1 to 4 wherein the lid of the second utility box is pre-installed to said extension piece, and used on the extended meter box.

6. A method of producing an extension piece from a first utility meter box specifically adapted for the housing therein of a first type utility meter, for extending a second such utility meter box so as to adapt it for the housing therein of a second type meter, said method comprising:
removing the base from said utility meter box; and
attaching a bracket to the inside of said extension piece for holding said second type meter.

7. A method as claimed in any of claim 6 comprising the step of removing the lid from said utility meter box.

8. A method as claimed in claim 6 or 7 further comprising pre-installing modified pipework to said extension piece.

9. A method as claimed in any preceding claim wherein said first type of meter comprises a credit type meter and said second type of meter comprises a pre-payment type meter.

10. A method as claimed claim 9 wherein said credit type meter had been located inside the first utility meter box prior to said adaptation, said method further comprising the step of replacing said credit type meter with a pre-payment type meter.

11. A method as claimed in claim 10 wherein said first utility meter box comprises a well for the location therein of a lower portion of said credit meter, said method further including placing the pre-payment meter on top of said well, such that pre-payment is able to be effected relatively unimpeded.

12. A method as claimed in any preceding claim wherein said first and second utility meter boxes are of a type of box known as a semi concealed meter box.

13. A method as claimed in claim 12 wherein said semi concealed meter box is one of the types used by Independent Gas Transporters (IGTs).

14. A method as claimed in claim 12 or 13 wherein said first and second utility meter boxes are of a type manufactured by "Mitras", "Hepworth" or "Continental Products"

15. An extended utility meter box obtained by any of the methods as claimed in any of claims 1 to 5, and 9 to14 when dependent on claims 1 to 5.

16. An extension piece obtained by any of the methods as claimed in any of claims 6 to 8, and 9 to14 when dependent on claims 6 to 8.
